# EUROPÄISCHE PATENTSCHRIFT

(11) **EP 1 288 762 B1**
(45) Veröffentlichungstag und Bekanntmachung des Hinweises auf die Patenterteilung: **03.03.2010**
(21) Anmeldenummer: 02015390.4
(22) Anmeldetag: 11.07.2002
(51) Int. Cl.: G05G 9/047

(54) **Bedienungselement für eine Antriebsvorrichtung**
Operating element for driving device
Elément de commande pour dispositif d'entrainement

(30) Priorität: 24.08.2001 DE 10141566
(43) Veröffentlichungstag der Anmeldung: 05.03.2003
(73) Patentinhaber: Ulrich Alber GmbH, 72461 Albstadt-Tailfingen (DE)
(72) Erfinder: Birmanns, Thomas, 72336 Balingen (DE); Schiess, Otto, 72336 Balingen (DE)
(74) Vertreter: Staudt, Hans-Peter

(56) Entgegenhaltungen:
- DE-A1- 4 241 805
- DE-C1- 19 918 605

## Beschreibung

Die Erfindung betrifft ein Bedienungselement für eine Antriebsvorrichtung zum Antreiben eines Beförderungsmittels, insbesondere eines elektrisch antreibbaren Rollstuhls.

Rollstühle werden häufig von älteren Personen benötigt. Deren Lebensgefährten, die den Rollstuhl meistens schieben, haben ebenfalls oftmals schon ein fortgeschrittenes Alter erreicht und gelangen beim Schieben von Rollstühlen mitunter schnell an ihre Leistungsgrenze. Für ältere Personen, die einen Rollstuhl schieben, stellen daher Steigungen und Gefälle oftmals unüberwindbare Hindernisse dar.

Zur Unterstützung des Antriebs von Rollstühlen sind Schiebehilfen bekannt, die an einem Rollstuhl befestigbar sind und von der den Rollstuhl schiebenden Begleitperson betätigt werden können. Eine derartige Schiebehilfe ist unter der Bezeichnung "viamobil" im Handel und wird von der Ulrich Alber GmbH + Co. KG, 72458 Albstadt, Deutschland, hergestellt.

Diese bekannte Schiebehilfe weist ein Bedienungselement mit einem Steuerungselement auf, das einen Betätigungsweg mit zwei vorbestimmten Betriebsstellungen aufweist, wobei bei einer ersten vorbestimmten Betriebsstellung die Antriebsleistung der Antriebsvorrichtung gleich Null ist, die Antriebsleistung der Antriebsvorrichtung bei Betätigung des Steuerungselements in einer ersten Richtung ausgehend von dieser ersten vorbestimmten Betriebsstellung ansteigt und die Antriebsleistung der Antriebsvorrichtung bei Erreichen einer zweiten vorbestimmten Betriebsstellung einen Maximalwert erreicht.

Mit anderen Worten, die als Schiebehilfe für einen Rollstuhl ausgeführte bekannte Antriebsvorrichtung weist ein Bedienungselement mit einem Betätigungshebel auf, der sich in nicht betätigtem Zustand in einer Nullstellung befindet. In dieser Nullstellung ist die Antriebsleistung der Antriebsvorrichtung gleich Null. Wird der Betätigungshebel entgegen einer Federkraft betätigt, steigt die Antriebsleistung mit zunehmendem Betätigungsweg an. Wenn der vollständige Betätigungsweg ausgenutzt wird, d.h. der Betätigungshebel an einem Anschlag angelangt ist, wird die maximale Antriebsleistung bereitgestellt.

Wenn der von der Schiebehilfe angetriebene Rollstuhl bei voll betätigtem Betätigungshebel, d.h. bei maximaler Antriebsleistung, gegen ein Hindernis stößt, geraten insbesondere ältere Leute mitunter in Panik. Intuitiv wird der Handgriff, an dem der Betätigungshebel befestigt ist, fester umklammert. Hierdurch wird die maximale Antriebsleistung beibehalten. Es wird somit eine der momentanen Lage nicht entsprechende und im Grunde genommen dieser entgegenlaufende Betätigungsoperation durchgeführt.

Aus der DE 42 41 805 A1 ist eine Vorrichtung zur Abgabe eines Stellbefehls für die Steuerung eines Stellgliedes einer Brennkraftmaschine in einem Kraftfahrzeug bekannt. Diese bekannte Vorrichtung weist ein Stellelement gemäß dem Oberbegriff des Anspruchs 1 auf, mit einem Mitnehmer, der mit einem wahlweise in den Stellweg des Mitnehmers einschaltbaren mechanischen Widerstand in der Weise zusammenwirkt, dass das weitere Durchdrücken des Fahrpedals ab einer einstellbaren Position spürbar erschwert ist. Diese Position korreliert mit einer niedrigen Fahrzeuggeschwindigkeit, beispielsweise 30 km/h, an deren Einhaltung der Fahrzeugführer durch den wahlweise einschaltbaren mechanischen Widerstand erinnert wird.

Der Erfindung liegt die Aufgabe zugrunde, das vorstehend erläuterte technische Problem im Zusammenhang mit der Handhabung einer Schiebehilfe oder dergleichen zu lösen. Die Lösung dieser Aufgabe ist in Patentanspruch 1 angegeben.

Erfindungsgemäß ist ein Bedienungselement für eine Antriebsvorrichtung der zuvor beschriebenen Art dadurch gekennzeichnet, dass die Veränderung der Antriebsleistung beim Überschreiten der zweiten vorbestimmten Betriebsstellung in der ersten Richtung darin besteht, dass die Antriebsleistung auf Null zurück geht.

Wie zuvor erläutert, besteht eine durch ein unvorhergesehenes Ereignis, insbesondere ein Anstoßen des Rollstuhls an ein Hindernis, verursachte Reaktion oft darin, einen Griff fester zu schließen, beispielsweise in dem unbewussten Bemühen, den Rollstuhl durch Körperkraft festzuhalten oder in Gegenrichtung zu bewegen.

Bei dem erfindungsgemäßen Bedienungselement hat ein derartiges Festhalten zur Folge, dass die Antriebsleistung nicht auf ihrem momentanen Wert beibehalten, sondern auf Null verändert wird.

Die Veränderung kann je nach Ausführungsform der Erfindung oder in Abhängigkeit von der Betätigung eines entsprechenden Schältelements unterschiedlich sein. Die Veränderung kann beispielsweise darin bestehen, dass die Antriebsleistung, gegebenenfalls sukzessive, dem Betrage nach auf Null zurückgenommen wird oder sofort ganz auf Null zurückgeht.

Vorzugsweise steigt die Betätigungskraft längs des Betätigungsweges des Steuerungselements in der ersten Richtung von der ersten vorbestimmten Betriebsstellung bis zum Erreichen der zweiten vorbestimmten Betriebsstellung an. Die zum Erreichen der zweiten vorbestimmten Betriebsstellung vorbestimmte Betätigungskraft ist vorzugsweise kleiner als die zum Überschreiten der zweiten vorbestimmten Betriebsstellung in der ersten Richtung erforderliche Betätigungskraft. Hierbei verläuft die Funktion der Betätigungskraft über den Betätigungsweg des Steuerungselements in der ersten Richtung im Bereich der zweiten vorbestimmten Betriebsstellung vorzugsweise unstetig, wobei die Betätigungskraft nach dem Erreichen der zweiten vorbestimmten Betriebsstellung zunächst diskontinuierlich ansteigt und nach dem Überschreiten der zweiten vorbestimmten Betriebsstellung in der ersten Richtung abfällt.

In einer bevorzugten Ausführungsform ist das Steuerungselement schwenkbar gelagert und als Steuerungshebel so ausgeführt, dass dieser mittels Handkraft gegen eine Federkraft von der ersten vorbestimmten Betriebsstellung in die zweite vorbestimmte Betriebsstellung bringbar ist.

In einer Ausführungsform der Erfindung ist in der zweiten vorbestimmten Betriebsstellung ein mechanischer Anschlag in Form eines elastisch verformbaren Elements bereitgestellt, das eine Wölbung aufweist, wobei ein mit dem Hebel verbundenes Bauteil beim Erreichen der zweiten vorbestimmten Betriebsstellung in der ersten Richtung des Betätigungsweges mit der konvexen Seite der Wölbung in Berührung gelangt und bei Erhöhung der Betätigungskraft das elastisch verformbare Element im Bereich der Wölbung so verformt wird, dass die Berührungsstelle des mit dem Hebel verbundenen Bauteils im konkaven Teil der Wölbung liegt. Hierbei wird vorzugsweise durch die Verformung des elastisch verformbaren Elements ein Kontakt geschlossen mit der Folge, dass die Antriebsleistung der Antriebsvorrichtung verändert wird.

Das verformbare Element ist vorzugsweise eine sogenannte Schnappfeder mit taktiler Rückmeldung. Charakteristisch für eine derartige Schnappfeder ist die nicht lineare Kennlinie der Betätigungskraft, das deutliche Umschnappen nach Erreichen der Betätigungskraft und die automatische Rückstellung. Es handelt sich hierbei um ein sogenanntes monostabiles Federelement, wie es unter anderem Verwendung in Folientastaturen findet.

Bei der Betätigung des Steuerungselements wird vorzugsweise ein Potentiometer zur Steuerung der Antriebsleistung der Antriebsvorrichtung betätigt. Bei einer weiteren bevorzugten Ausführungsform kann eine Steuerungseinrichtung, die beim Überschreiten der zweiten vorbestimmten Betriebsstellung in der ersten Richtung sich ergebenden Werte des Potentiometers als Abschaltwerte erkennen und dazu ausgelegt sein, die Antriebsvorrichtung bei Erkennen dieser Abschaltwerte so anzusteuern, dass die Antriebsleistung der Antriebsvorrichtung verändert wird.

Die Erfindung betrifft zudem eine Schiebe- und/oder Bremshilfe für einen Rollstuhl mit einem Bedienungselement der vorstehend erläuterten Art.

Nachfolgend wird die Erfindung anhand bevorzugter Ausführungsbeispiele weiter erläutert unter Bezugnahme auf die Zeichnung, in der:
Fig. 1 eine Schnittdarstellung einer ersten Ausführungsform eines erfindungsgemäßen Bedienungselements für eine Antriebsvorrichtung ist,
Fig. 2 eine Explosionszeichnung der Ausführungsform gemäß Fig. 1 ist,
Fig. 3 eine vergrößerte Darstellung der Einzelheit A gemäß Fig. 1 ist,
Fig. 4 eine im wesentlichen Fig. 1 entsprechende Darstellung einer zweiten Ausführungsform der Erfindung ist,
Fig. 5 eine Darstellung der Anwendung einer erfindungsgemäßen Schiebe-/Bremshilfe für einen Rollstuhl ist,
Fig. 6 eine schematische Darstellung eines Rollstuhls und einer Schiebe-/Bremshilfe ist und
Fig. 7 eine Rückansicht eines Rollstuhls ist, an dem eine Schiebe-/Bremshilfe angebracht ist.

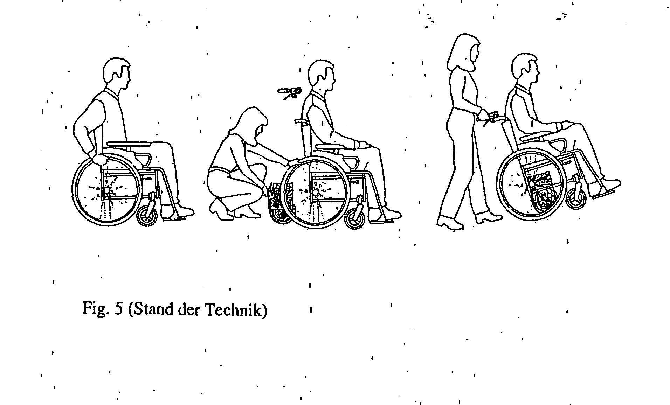

Im folgenden werden zunächst unter Bezug auf die Figuren 5 bis 7 die Anwendung und die grundsätzlichen Funktionen einer Schiebe-/Bremshilfe für einen Rollstuhl erläutert.

Fig. 5 zeigt in drei aufeinanderfolgenden Darstellungen einen Fall, in dem eine Person in einem Rollstuhl 200 eine Steigung mit Hilfe einer Hilfsperson bewältigen möchte. Hierzu führt die Hilfsperson eine Schiebe-/Bremshilfe 100 von hinten an den Rollstuhl 200 heran, befestigt Erstere an Letzterem und kann alsdann mit Unterstützung der Schiebe-/Bremshilfe 100 die Steigung bewältigen.

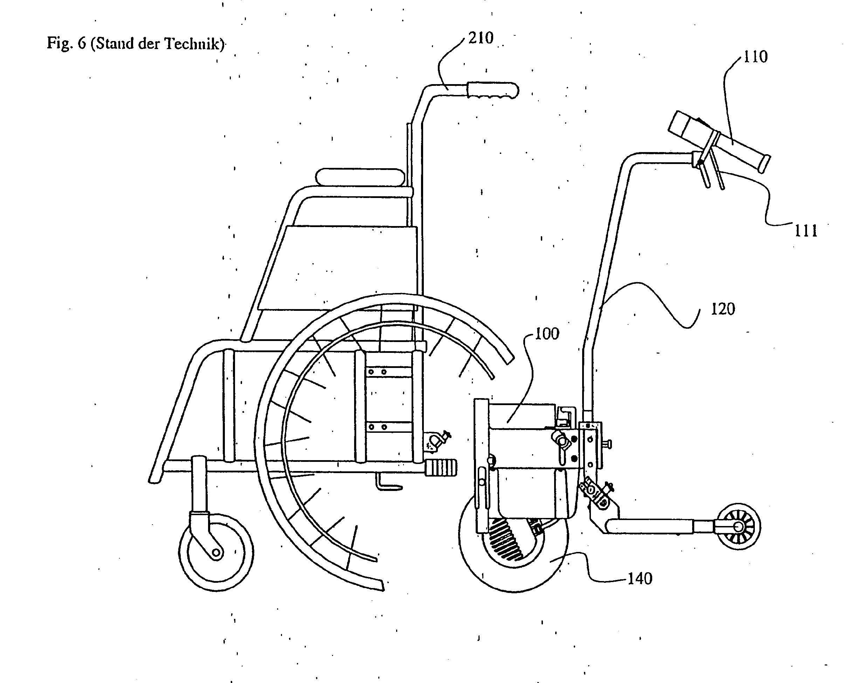

Fig. 6 zeigt schematisch einen Rollstuhl 200, wobei aus Gründen der Darstellung ein Teil der Hinterräder weggelassen ist, sowie eine Schiebe-/Bremshilfe 100. Die Schiebe-/Bremshilfe 100, die, wie in Fig. 5 gezeigt, an dem Rollstuhl 200 befestigbar ist, verfügt über einen separaten Handgriff 110 mit einem Betätigungshebel 111. Es versteht sich für den Fachmann, dass andere Konfigurationen möglich sind, sowohl bezüglich der Anordnung des Handgriffs 110 als auch bezüglich des Betätigungshebels 111. Insbesondere kann beispielsweise der Handgriff 110 direkt auf ein Griffende 210 des Rollstuhls 200 aufgeschoben werden. Hierdurch kann eine Haltestange 120 an der Schiebestange entfallen und durch ein Übertragungsmittel zwischen dem Handgriff 110 und der Schiebehilfe 100, beispielsweise ein Kabel (nicht dargestellt) ersetzt werden.

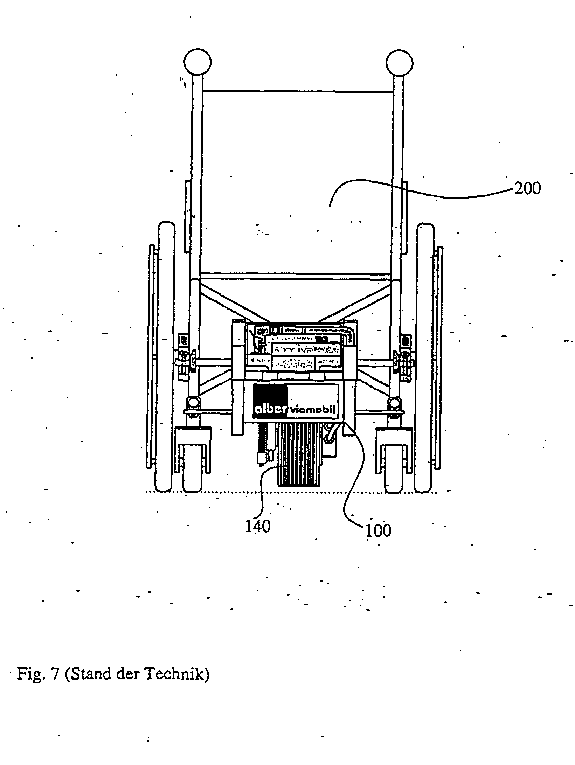

Fig. 7 zeigt eine Rückansicht des Rollstuhls 200 mit montierter Schiebe-/Bremshilfe 100. In der Darstellung gemäß Fig. 7 ist das Antriebsrad 140 der Schiebe-/Bremshilfe 100 leicht angehoben und kann im Bedarfsfall soweit abgesenkt werden, dass es ausreichenden Bodenkontakt hat und in dieser Stellung seine Funktion als Schiebe-/Bremshilfe 100 ausüben kann.

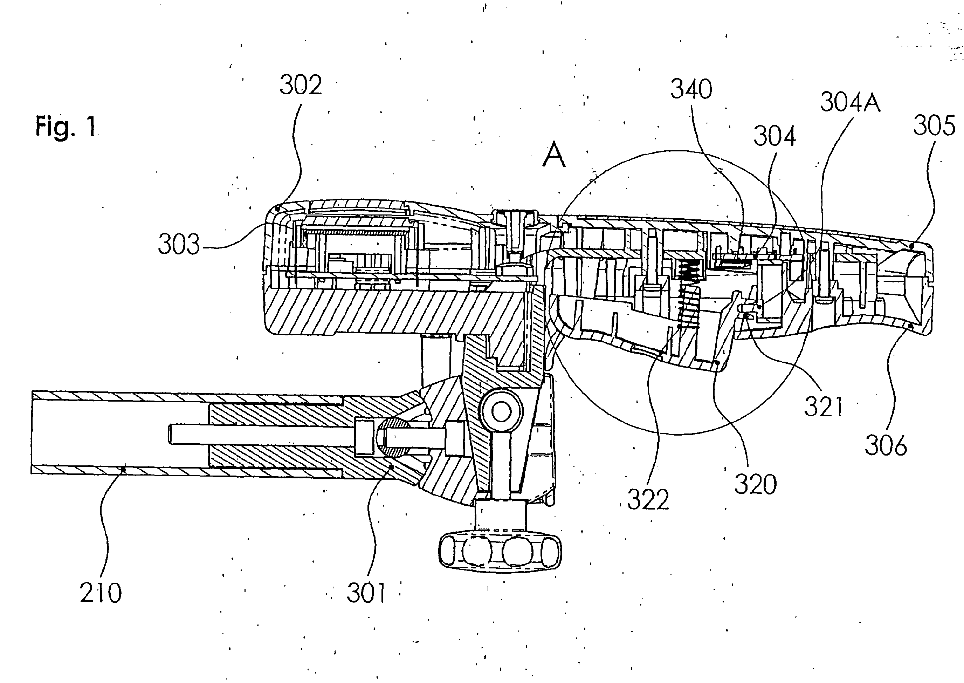

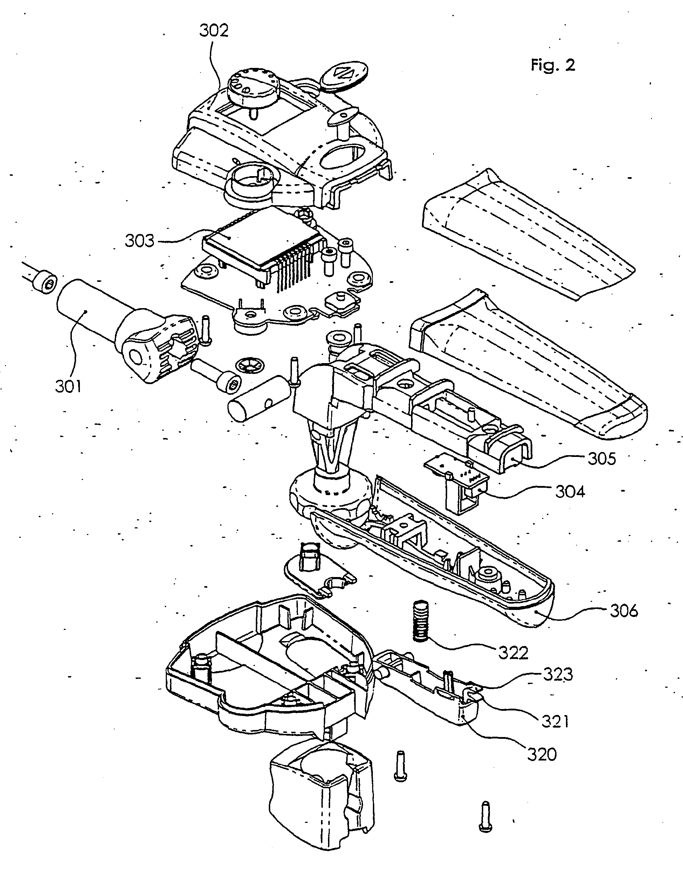

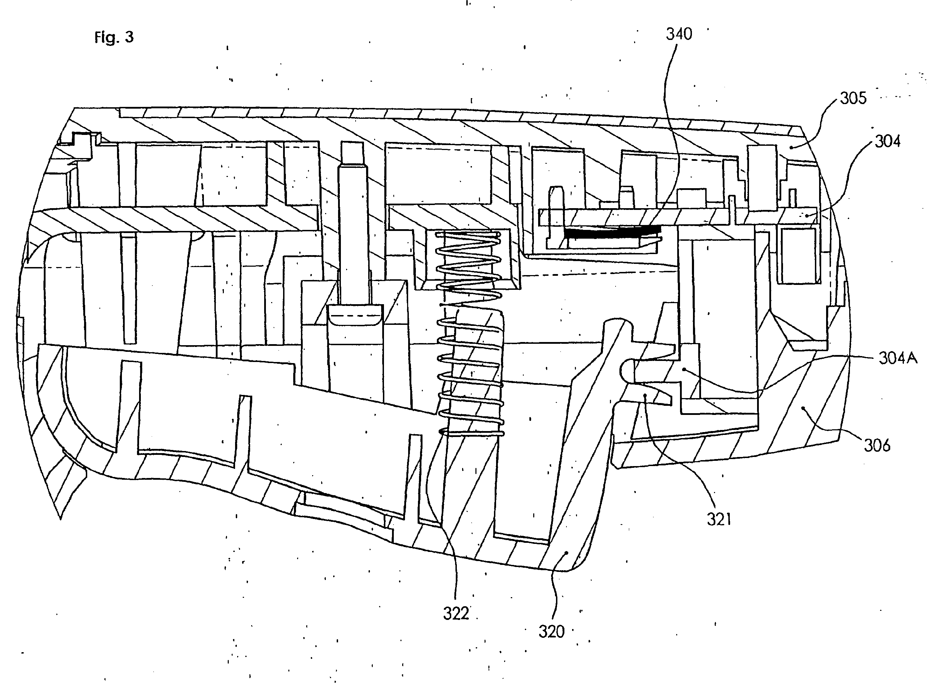

Eine erste Ausführungsform des erfindungsgemäßen Bedienungselements wird nachfolgend anhand der Figuren 1 bis 3 beschrieben.

Fig. 1 zeigt eine Schnittdarstellung einer ersten Ausführungsform eines erfindungsgemäßen Bedienungselements.

Das Bedienungselement kann wahlweise an dem linken oder rechten Schiebegriff 210 eines Rollstuhls angebracht werden, wobei es vorzugsweise über ein entsprechendes Inlet 301 in das offene Ende des Rollstuhlgriffs 210 eingesteckt und über eine Kugelaufnahme und eine Knebelschraube fixiert wird. Es versteht sich für den Fachmann, dass beliebige weitere Befestigungsmöglichkeiten des Bedienungselements an dem Rollstuhl möglich sind.

In einem vorderen Teil 302 des Gehäuses ist eine Hauptsteuerplatine 303 angeordnet. Eine Geberplatine 304 mit einem Schiebepotentiometer 304 A ist in den Griffteilen 305 und 306 angeordnet. An dem unteren Griffteil 306 ist ein als Steuerungshebel ausgelegtes Steuerungselement 320 schwenkbar gelagert. Der Steuerungshebel 320 befindet sich über eine U-förmige Ausnehmung 321 mit dem Schiebepotentiometer 304 A in Eingriff.

Der Steuerungshebel 320 wird durch eine Feder 322 in Richtung einer ersten Betriebsstellung gedrückt. In dieser ersten Betriebsstellung befindet sich das Schiebepotentiometer 304 A in einer Stellung, in der die Antriebsleistung der Antriebsvorrichtung gleich Null ist.

Wird der Steuerungshebel 320 entgegen der Kraft der Feder 322 betätigt, wird das Schiebepotentiometer 304 A entsprechend verschoben und die Antriebsleistung der Antriebsvorrichtung steigt an.

Nach einem vorbestimmten Betätigungsweg gelangt ein Anschlagselement 323 des Steuerungshebels 320 mit einem an der Geberplatine 304 angeordneten elastisch verformbaren Element 340 in Berührung. In dieser zweiten vorbestimmten Betriebsstellung des Betätigungshebels 320 befindet sich das Schiebepotentiometer 304 A in einer Stellung, in der die maximale Antriebsleistung der Antriebsvorrichtung bereitgestellt wird.

Die Berührung des Anschlagselements 323 mit dem elastisch verformbaren Element 340 stellt für die Bedienperson einen spürbaren Anschlag dar. Die Elastizität des elastisch verformbaren Elements 340 ist so gewählt, dass ein Überschreiten des Betätigungswegs in der ersten Richtung von der Ausgangsstellung, d.h. der ersten vorbestimmten Betriebsstellung, in der die Leistung der Antriebsvorrichtung gleich Null ist, in die zweite vorbestimmte Betriebsstellung, in der die maximale Antriebsleistung vorliegt, bei normaler Betätigung nicht überschritten wird. Wird allerdings eine merklich erhöhte Kraft aufgebracht, verformt sich das elastisch verformbare Element derart, dass der Betätigungshebel weiter in der zuvor definierten ersten Richtung betätigt werden kann. Hierdurch wird an der Geberplatine 304 ein Kontakt geschlossen, der bewirkt, dass die Antriebsleistung der Antriebsvorrichtung verändert wird.

Das elastisch verformbare Element 340 ist als Schnappfeder oder Schnappscheibe ausgeführt, wie sie beispielsweise von der Firma INOVAN-Stroebe KG, 75217 Birkenfeld, Deutschland, im Handel erwerblich ist. Eine derartige Schnappfeder weist eine Wölbung auf, deren konvexe Seite in Ruhestellung dem Anschlagselement 323 des Steuerungshebels 320 zugewandt ist. Beim Überschreiten der zweiten vorbestimmten Betriebsstellung in Richtung des ersten Betätigungsweges drückt das Anschlagselement 323 die besagte Wölbung ein, wobei ein Umschnappen erfolgt, so dass das Anschlagselement 323 des Steuerungshebels 320 nunmehr mit der konkaven Seite der Wölbung in Berührung steht. In dieser Stellung schließt das elastisch verformbare Element 340 einen Kontakt auf der Geberplatine 304.

Dieses Schließen des Kontaktes auf der Geberplatine 304 bewirkt eine Veränderung der Antriebsleistung der Antriebsvorrichtung. Diese kann dem Betrage nach verändert werden, d.h. beispielsweise sofort ganz auf Null zurückgenommen werden oder in ihrer Höhe reduziert werden. Es ist jedoch ebenfalls möglich, die Antriebsleistung in ihrer Richtung umzukehren, wobei hierbei die Antriebsleistung dem Betrage nach ebenfalls reduziert sein kann.

Das Erreichen dieses Betriebszustands, in dem die Antriebsleistung verändert wird, im folgenden auch "Panikfunktion" genannt, kann durch ein optisches oder akustisches Signal angezeigt werden.

Zur Bereitstellung einer gewünschten Kennlinie des Kraftverlaufs beim Erreichen des Anschlags zwischen dem Anschlagselement 323 und dem elastisch verformbaren Element 340 sowie darüberhinaus können gegebenenfalls mehrere Schnappscheiben eingesetzt oder die Abmessungen der Schnappscheibe bzw. der Schnappscheiben variiert werden.

Es besteht zudem die Möglichkeit, mittels eines Schalters (nicht gezeigt) die vorstehend erläuterte "Panikfunktion", d.h. die Veränderung der Antriebsleistung bei Überschreitung der zweiten vorbestimmten Betriebsstellung in der ersten Betätigungsrichtung, wahlweise zu aktivieren und zu deaktivieren. Zudem besteht die Möglichkeit, die Art und das Ausmaß der Veränderung der Antriebsleistung entsprechend auszuwählen.

Es versteht sich für den Fachmann, dass das Bedienungselement eine Reihe weiterer Betätigungsmerkmale und Funktionen aufweisen kann, insbesondere einen Schalter zum Ein-/Ausschalten der Schiebe-/Bremshilfe, einen Fahrtrichtungsschalter, mit dem die Fahrtrichtung gewählt werden kann, ein Stellrad, mit dem eine maximal mögliche Geschwindigkeit für den Fall, dass sich der Steuerungshebel 320 in der zweiten vorbestimmten Betriebsstellung befindet, gewählt werden kann, wobei diese maximale Geschwindigkeit beispielsweise zwischen 1,1 und 5,5 km/h betragen kann, sowie Mittel zum optischen und/oder akustischen Anzeigen von bestimmten Betriebszuständen, wobei insbesondere die Möglichkeit besteht, mittels eines akustischen Signals auf eine zu geringe Kapazität der Akkumulatoren aufmerksam zu machen.

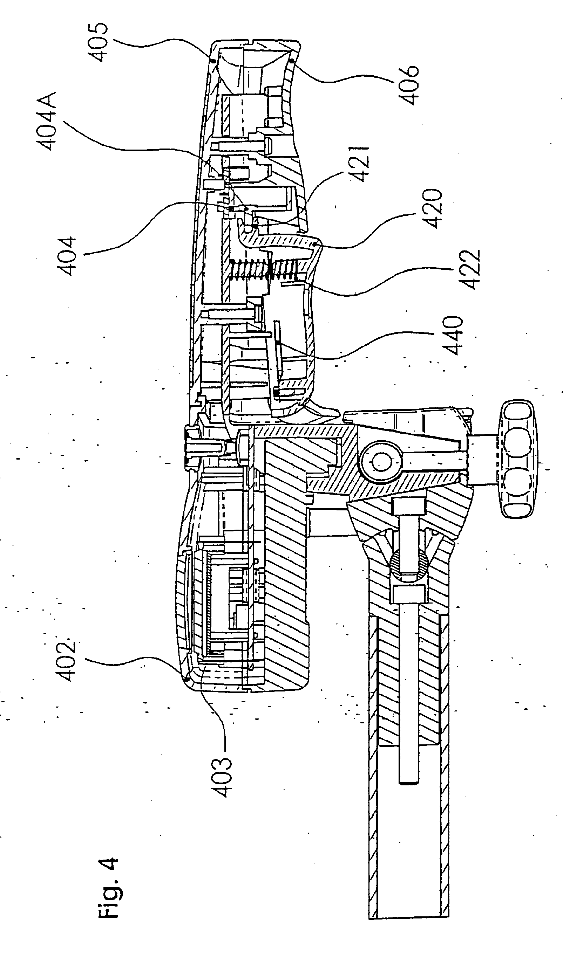

Fig. 4 zeigt eine zweite Ausführungsform des erfindungsgemäßen Bedienungselements, die im wesentlichen der in den Figuren 1 bis 3 dargestellten Ausführungsform entspricht. Entsprechende Bauteile sind daher mit den gleichen Bezugszeichen versehen, die lediglich um die Zahl 100 erhöht wurden.

Die Ausführungsform gemäß Fig. 4 unterscheidet sich von derjenigen gemäß den Figuren 1 bis 3 im wesentlichen dadurch, dass das elastisch verformbare Element 440 nicht auf der Geberplatine 404 angeordnet ist und dass es keine selbstständige Schaltfunktion übernimmt. Das elastisch verformbare Element 440 dieser zweiten Ausführungsform dient lediglich dazu, die zweite vorbestimmte Betriebsstellung des Steuerungshebels 420 bereitzustellen, und ermöglicht es, bei Überschreiten einer vorbestimmten Betätigungskraft den Steuerungshebel 420 in der ersten Betätigungsrichtung über diese zweite vorbestimmte Betriebsstellung hinaus zu betätigen. Zu diesem Zweck ist das elastisch verformbare Element 440 ebenfalls in Form einer Schnappfeder ausgeführt.

Die Steuerungsfunktion wird bei dieser zweiten Ausführungsform von dem Schiebepotentiometer 404 A übernommen, das dazu ausgelegt ist, zu erkennen, dass die zweite vorbestimmte Betriebsstellung überschritten ist, so dass die elektronische Steuerung bei entsprechenden Potentiometerwerten eine entsprechende Veränderung der Antriebsleistung der Antriebsvorrichtung bewirken kann. Es wird somit ebenfalls ein taktiles Verhalten des Bedienungselements bereitgestellt, bei dem mittels des Steuerungshebels, ausgehend von einer ersten Betriebsstellung, in der die Antriebsleistung der Antriebsvorrichtung gleich Null ist, die Antriebsleistung der Antriebsvorrichtung gesteigert werden kann bis zu einem Maximalwert, der bei einer zweiten vorbestimmten Betriebsstellung des Steuerungshebels 420 vorliegt, wobei bei weiter erhöhter Betätigungskraft ein Überschreiten dieser zweiten vorbestimmten Betriebsstellung in der ersten Bewegungsrichtung möglich ist, welches dann eine Änderung der Antriebsleistung zur Folge hat.

Die Darstellung gemäß Fig. 1 unterscheidet sich von der Darstellung gemäß Fig. 4 zudem darin, dass in Fig. 1 die erste vorbestimmte Betriebsstellung gezeigt ist, d.h. die Nullstellung, bei der die Antriebsleistung der Antriebsvorrichtung gleich Null ist, während in Fig. 4 der Steuerungshebel 420 in der zweiten vorbestimmten Betriebsstellung gezeigt ist, bei der die maximale Antriebsleistung der Antriebsvorrichtung vorliegt.

## Patentansprüche

1. Bedienungselement für eine Antriebsvorrichtung zum Antreiben eines Beförderungsmittels, insbesondere eines elektrisch antreibbaren Rollstuhl,
mit einem Steuerungselement, das einen Betätigungsweg mit mindestens zwei vorbestimmten Betriebsstellungen aufweist, wobei bei einer ersten vorbestimmten Betriebsstellung die Antriebsleistung der Antriebsvorrichtung gleich Null ist, die Antriebsleistung der Antriebsvorrichtung bei Betätigung des Steuerungselements in einer ersten Richtung (X) ausgehend von dieser ersten vorbestimmten Betriebsstellung ansteigt und die Antriebsleistung der Antriebsvorrichtung bei Erreichen einer zweiten vorbestimmten Betriebsstellung einen Maximalwert erreicht,
wobei sich der Betätigungsweg des Steuerungselements in der ersten Richtung (X) über die zweite vorbestimmte Betriebsstellung hinaus erstreckt, wobei zum Überschreiten der zweiten vorbestimmten Betriebsstellung in der ersten Richtung (X) ein Übersteigen einer vorbestimmten Betätigungskraft erforderlich ist und wobei das Überschreiten der zweiten vorbestimmten Betriebsstellung in der ersten Richtung (X) zur Folge hat, dass die Antriebsleistung der Antriebsvorrichtung verändert wird,
**dadurch gekennzeichnet,**
**dass** die Veränderung der Antriebsleistung beim Überschreiten der zweiten vorbestimmten Betriebsstellung in der ersten Richtung (X) darin besteht, dass die Antriebsleistung auf Null zurück geht.

2. Bedienungselement nach Anspruch 1, **dadurch gekennzeichnet, dass** die Betätigungskraft längs des Betätigungsweges des Steuerungselements in der ersten Richtung (X) von der ersten vorbestimmten Betriebsstellung bis zum Erreichen der zweiten vorbestimmten Betriebsstellung ansteigt.

3. Bedienungselement nach Anspruch 1 oder 2, **dadurch gekennzeichnet, dass** die zum Erreichen der zweiten vorbestimmten Betriebsstellung vorbestimmte Betätigungskraft kleiner ist als die zum Überschreiten der zweiten vorbestimmten Betriebsstellung in der ersten Richtung (X) erforderliche Betätigungskraft.

4. Bedienungselement nach Anspruch 2 oder 3, **dadurch gekennzeichnet, dass** die Funktion der Betätigungskraft über dem Betätigungsweg des Steuerungselements in der ersten Richtung (X) im Bereich der zweiten vorbestimmten Betriebsstellung unstetig verläuft, wobei die Betätigungskraft nach dem Erreichen der zweiten vorbestimmten Betriebsstellung zunächst diskontinuierlich ansteigt und nach dem Überschreiten der zweiten vorbestimmten Betriebsstellung in der ersten Richtung (X) abfällt.

5. Bedienungselement nach einem der vorstehenden Ansprüche,
**dadurch gekennzeichnet, dass** das Steuerungselement schwenkbar gelagert und als Steuerungshebel so ausgeführt ist, dass er mittels Handkraft gegen eine Federkraft von der ersten vorbestimmten Betriebsstellung in die zweite vorbestimmte Betriebsstellung bringbar ist.

6. Bedienungselement nach Anspruch 5, **dadurch gekennzeichnet, dass** in der zweiten vorbestimmten Betriebsstellung ein mechanischer Anschlag in Form eines elastisch verformbaren Elements bereitgestellt ist, das eine Wölbung aufweist, wobei ein mit dem Hebel verbundenes Bauteil beim Erreichen der zweiten vorbestimmten Betriebsstellung in der ersten Richtung (X) des Betätigungsweges mit der konvexen Seite der Wölbung in Berührung gelangt und bei Erhöhung der Betätigungskraft das elastisch verformbare Element im Bereich der Wölbung so verformt wird, dass die Berührungsstelle des mit dem Hebel verbundenen Bauteils im konkaven Teil der Wölbung liegt.

7. Bedienungselement nach Anspruch 6, **dadurch gekennzeichnet, dass** durch die Verformung des elastisch verformbaren Elements ein Kontakt geschlossen wird mit der Folge, dass die Antriebsleistung der Antriebsvorrichtung verändert wird.

8. Bedienungselement nach Anspruch 6, **dadurch gekennzeichnet, dass** durch Betätigung des Steuerungselements ein Potentiometer zur Steuerung der Antriebsleistung der Antriebsvorrichtung betätigt wird,
wobei eine Steuerungseinrichtung die beim Überschreiten der zweiten vorbestimmten Betriebsstellung in der ersten Richtung (X) sich ergebenden Werte des Potentiometers als Abschaltwerte erkennt und dazu ausgelegt ist, die Antriebsvorrichtung bei Erkennung dieser Abschaltwerte so anzusteuern, dass die Antriebsleistung der Antriebsvorrichtung verändert wird.

9. Schiebehilfe- und/oder Bremshilfe für einen Rollstuhl mit einem Bedienungselement nach einem der vorstehenden Ansprüche 1 bis 8.

## Claims

1. Operator control for a drive device for driving a transport means, in particular an electrically driven wheel chair,
with a control element comprising an actuator travel with at least two predetermined operating positions, wherein in a first predetermined operating position, the driving power of the drive device equals zero, the driving power of the drive device increases when the control element is actuated in a first direction (X) starting from this first predetermined operating position, and the driving power of the drive device reaches a maximum value when a second predetermined operating position is reached,
wherein the actuator travel of the control element in the first direction (X) extends beyond the second predetermined operating position, wherein for going beyond the second predetermined operating position in the first direction (X), it is required to exceed a predetermined actuating force, and wherein going beyond the second predetermined operating position in the first direction (X) results in the driving power of the drive device being changed,
**characterized in that**
the change of the driving power when the second predetermined operating position is passed over in the first direction (X) consists in the driving power being reset to zero.

2. Operator control according to claim 1, **characterized in that** the actuating force increases along the actuator travel of the control element in the first direction (X) from the first predetermined operating position until it reaches the second predetermined operating position.

3. Operator control according to claim 1 or 2, **characterized in that** the predetermined actuating force for reaching the second predetermined operating position is smaller than the actuating force required for going beyond the second predetermined operating position in the first direction (X).

4. Operator control according to claim 2 or 3, **characterized in that** the function of the actuating force is discontinuous across the actuator travel of the control element in the first direction (X) in the region of the second predetermined operating position, wherein the actuating force first increases discontinuously after the second predetermined operating position has been reached, and decreases after the second predetermined operating position has been passed over in the first direction (X).

5. Operator control according to one of the preceding claims, **characterized in that** the control element is pivoted and designed as control lever such that it can be brought from the first predetermined operating position into the second predetermined operating position by manual force against a spring force.

6. Operator control according to claim 5, **characterized in that** a mechanical stop in the form of an elastically deformable element is provided in the second predetermined operating position, the element comprising a bulge, wherein a component connected to the lever contacts the convex side of the bulge when the second predetermined operating position is reached in the first direction (X) of the actuator travel, and when the actuating force is increased, the elastically deformable element is deformed in the region of the bulge such that the point of contact of the component connected to the lever is located in the concave portion of the bulge.

7. Operator control according to claim 6, **characterized in that** a contact is closed by deformation of the elastically deformable element, resulting in the driving power of the drive device being changed.

8. Operator control according to claim 6, **characterized in that** a potentiometer for controlling the driving power of the drive device is actuated by actuating the control element, wherein a control means identifies the values of the potentiometer resulting when the second predetermined operating position is passed over in the first direction (X) as cut-off values and is designed to control the drive device when it identifies these cut-off values such that the driving power of the drive device is changed.

9. Pushing aid and/or braking aid for a wheel chair with an operator control according to one of the preceding claims 1 to 8.

## Revendications

1. Elément de commande pour un dispositif d'entraînement destiné à entraîner un moyen de transport, en particulier une chaise roulante pouvant être entraînée électriquement,
doté d'un élément de commande qui présente une course d'actionnement pourvue d'au moins deux positions de fonctionnement prédéfinies, la puissance moteur du dispositif d'entraînement étant égale à zéro dans une première position de fonctionnement prédéfinie, la puissance moteur du dispositif d'entraînement augmentant lors de l'actionnement de l'élément de commande dans une première direction (X) à partir de cette première position de fonctionnement prédéfinie et la puissance moteur du dispositif d'entraînement atteignant une valeur maximale lors de l'atteinte d'une seconde position de fonctionnement prédéfinie,
la course d'actionnement de l'élément de commande dans la première direction (X) s'étendant au-delà de la seconde position de fonctionnement prédéfinie, un franchissement d'une force de fonctionnement prédéfinie étant nécessaire pour dépasser la seconde position de fonctionnement prédéfinie dans la première direction (X) et le franchissement de la seconde position de fonctionnement prédéfinie dans la première direction (X) ayant pour conséquence que la puissance moteur du dispositif d'entraînement est modifiée,
**caractérisé par le fait**
**que** la modification de la puissance moteur lors du dépassement de la seconde position de fonctionnement prédéfinie dans la première direction (X) consiste dans le fait que la puissance moteur retourne à zéro.

2. Elément de commande selon la revendication 1, **caractérisé par le fait que** la force d'actionnement le long de la course d'actionnement de l'élément de commande dans la première direction (X) s'accroît de la première position de fonctionnement prédéfinie jusqu'à ce que la seconde position de fonctionnement prédéfinie soit atteinte.

3. Elément de commande selon la revendication 1 ou 2, **caractérisé par le fait que** la force d'actionnement prédéfinie pour atteindre la seconde position de fonctionnement prédéfinie est inférieure à la force d'actionnement nécessaire pour dépasser la seconde position de fonctionnement prédéfinie dans la première direction (X).

4. Elément de commande selon la revendication 2 ou 3, **caractérisé par le fait que** la fonction de la force d'actionnement s'étend de manière discontinue par l'intermédiaire de la course d'actionnement de l'élément de commande dans la première direction (X) dans la zone de la seconde position de fonctionnement prédéfinie, la force d'actionnement augmentant de manière discontinue après avoir atteint la seconde position de fonctionnement prédéfinie et diminuant après avoir dépassé la seconde position de fonctionnement prédéfinie dans la première direction (X).

5. Elément de commande selon l'une des revendications précédentes, **caractérisé par le fait que** l'élément de commande est monté pivotant et réalisé comme levier de commande de telle sorte qu'il peut être amené de la première position de fonctionnement prédéfinie à la seconde position de fonctionnement prédéfinie à l'aide de la force manuelle contre une force de ressort.

6. Elément de commande selon la revendication 5, **caractérisé par le fait qu'**une butée mécanique est fournie sous la forme d'un élément élastiquement déformable présentant une cambrure dans la seconde position de fonctionnement prédéfinie, un élément relié au levier venant en contact avec le côté convexe de la cambrure lorsque la seconde position de fonctionnement prédéfinie dans la première direction (X) de la course d'actionnement est atteinte et l'élément élastiquement déformable étant déformé dans la zone de la cambrure lorsque la force d'actionnement augmente, de telle sorte que le point de contact de l'élément relié au levier se trouve dans la partie concave de la cambrure.

7. Elément de commande selon la revendication 6, **caractérisé par le fait qu'**un contact est créé par la déformation de l'élément élastiquement déformable ayant pour conséquence que la puissance moteur du dispositif d'entraînement est modifiée.

8. Elément de commande selon la revendication 6, **caractérisé par le fait qu'**un potentiomètre destiné à la commande de la puissance moteur du dispositif d'entraînement est actionné par l'actionnement de l'élément de commande, un dispositif de commande reconnaissant les valeurs résultant du potentiomètre lors du dépassement de la seconde position de fonctionnement prédéfinie dans la première direction (X) en tant que valeurs de déconnexion et étant conçu pour commander le dispositif d'entraînement lors de la reconnaissance de ces valeurs de déconnexion de telle sorte que la puissance moteur du dispositif d'entraînement est modifiée.

9. Assistance de poussée et/ou de freinage pour une chaise roulante doté d'un élément de commande selon une des revendications précédentes 1 à 8.
